# NEUE EUROPÄISCHE PATENTSCHRIFT

(11) **EP 2 091 183 B2**
(45) Veröffentlichungstag und Bekanntmachung des Hinweises auf die Entscheidung über den Einspruch: **21.12.2016**
(45) Hinweis auf die Patenterteilung: 18.04.2012
(21) Anmeldenummer: 09001954.8
(22) Anmeldetag: 12.02.2009
(51) Int. Cl.: H04L 12/46, G05B 19/00, H04L 29/06, H04W 80/02, H04L 29/08, H04L 12/40

(54) **Zusammenfassen mehrerer Ethernet-Datenrahmen zu einem Ethernet-Telegramm**
Concatenation of several ethernet frames into one ethernet message
Concaténation de plusieurs frames ethernet dans un seul message ethernet

(30) Priorität: 18.02.2008 DE 102008009835
(43) Veröffentlichungstag der Anmeldung: 19.08.2009
(73) Patentinhaber: Phoenix Contact GmbH & Co. KG, 32825 Blomberg (DE)
(72) Erfinder: Weczerek, Jürgen, 32825 Blomberg (DE); Pape, Andreas, 33034 Brakel (DE); Lessmann, Gunnar, 33039 Neiheim (DE)
(74) Vertreter: Blumbach Zinngrebe

(56) Entgegenhaltungen:
- EP-A- 1 594 284
- WO-A-2004/075026
- US-A1- 2005 018 670
- US-A1- 2007 064 737
- US-A1- 2007 242 676
- LORCHAT J ET AL: "Energy Saving in IEEE 802.11 Communications using Frame Aggregation" GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, Bd. 3, 1. Dezember 2003 (2003-12-01), Seiten 1296-1300, XP010677504 ISBN: 978-0-7803-7974-9

## Beschreibung

Die vorliegende Erfindung betrifft, das Gebiet der Kommunikationstechnik.

Bekannte Funksysteme, wie beispielsweise das WLAN (WLAN: Wireless Local Area Network) nach dem Standard IEEE 802.11 oder das Bluetooth nach dem Standard IEEE 802.15.1, die eine transparente Übertragung von Ethernet-basierten Kommunikationsprotokollen erlauben, übertragen diese Protokolle höchst uneffizient, weil das Ethernet-Protokoll normalerweise in ein Funkdatenpaket ohne eine weitere Optimierung verpackt wird. Da die Ethernet-Pakete gemäß dem Standard IEEE 802.3 mindestens aus 64 Byte bestehen müssen, viele Automatisierungssysteme jedoch nur wenige Nutzdaten-Bytes in einem Ethernet-Datenrahmen übertragen, ist das Verhältnis von Nutzdaten zum Protokoll-Overhead bzw. zu der gesamten Protokolllänge bei Ethernet-Systemen ungünstig. Dies wird bei einer Funkübertragung dadurch noch verschlechtert, dass eine Funkverbindung eine noch geringere Datenrate als ein Ethernet-System besitzt. Darüber hinaus muss für die Funkverbindung zusätzlich ein für die Kommunikation notwendiger Protokoll-Overhead hinzugefügt werden, wobei ferner nur in einem Halbduplexverfahren übertragen werden kann. Daher ist das Taktzeitverhalten eines funkbasierten Ethernet-Systems grundsätzlich nachteiliger gegenüber dem Zeitverhalten eines drahtgebundenen Ethernet-Systems wie beispielsweise des Profinet-Systems.

Der Artikel von Lorchat et al.: "Energy Saving in IEEE 802.11 Communications using Frame Aggregation", IEEE, US, Bd. 3, 1, Dezember 2003, Seiten 1296-1300, offenbart ein Verfahren, in welchem mehrere aufeinander folgende Ethernet-Frames zu einem einzigen Ethernet-Frame zusammengefasst werden.

Die Offenlegungsschrift US 2007/242676 A1 beschreibt das Zusammenfassen von mehreren Frames zu einem einzigen Frame.

Die Offenlegungsschrift US 2005/018670 A1 offenbart ein Verfahren, in welchem mehrere Frames zu einem Frame zusammengefasst werden, wobei hier die Frames vorher noch in einer Warteschlange gespeichert werden.

In der Offenlegungsschrift 2007/064737 A1 wird ein Verfahren beschrieben, in welchem auf einer Empfängerseite mehrere Frames zu einem Frame zusammengefasst werden, um Speicherplatz zu sparen.

Aus der Offenlegungsschrift EP-A-1 594 284 geht ein Verfahren hervor, in welchem ein aus Datenpaketen zusammengesetzter Frame erzeugt wird, wobei der Frame einen MAC-Header aufweist, welcher zu sämtlichen Datenpaketen passt.

Problematisch bei bekannten Funksystemen ist, dass oft nur ein statistischer Medienzugriff erlaubt ist. Dadurch entstehen Nachteile im Zeitverhalten einer Automatisierungslösung durch beispielsweise einen erhöhten Jitter der Kommunikationszyklen. Zur Optimierung des Zeitverhaltens können beispielsweise Pollingbasierte Medienzugriffsverfahren eingesetzt werden, die bei Bluetooth standardmäßig und die bei WLAN zugelassen sind. Doch selbst bei diesen Systemen wird pro Polling-Zyklus nur ein Datenpaket eines E/A-Teilnehmers übertragen. Befinden sich hinter einer Funk-Verbindung jedoch mehrere E/A-Teilnehmer, die mit einer Steuerung beispielsweise in einem fest installierten Netzwerkteil zyklisch kommunizieren, so ist das Zeitverhalten der gesamten Kommunikation zwischen den E/A-Teilnehmern nicht immer vorhersehbar. So wird beispielsweise im Falle des Profinet-Standards bei einer WLAN-Übertragung ausgeschlossen, dass hinter der Funk-Brücke mehr als ein E/A-Teilnehmer vorgesehen sein können.

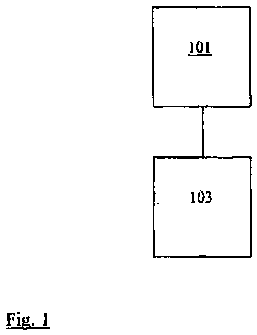

Die Druckschrift von Yuxia Lin, Vincent W.S. Wong, "WSN01-1: Frame Aggregation and Optimal Frame Size Adaptation for IEEE 802.11n WLANs", IEEE Globecom 2006, beschreibt MAC-Mechanismen in WLAN-Netzwerken, die nach dem IEEE 802.11n-Standard funktionieren. Dazu zeigt Fig. 1 ein Rahmenformat für eine A-MSDU (Aggregation - Mac Service Data Unit) und Fig. 2 für eine A-MPDU (Aggregation - Mac Protocol Data Unit). Auch die US 2006/0056443 A1 betrifft drahtlose Kommunikationsnetzwerke und ein Aggregieren von Rahmen in derartigen Netzwerken, wobei ein Aggregieren mittels Rahmen nach dem IEEE 802.11-Standard erfolgen kann. Die EP 1 603 304 A1 betrifft das Komprimieren von Ethernet-Paketen für die Übertragung zwischen Sender und Empfänger, wobei der Sender vollständige Ethernet-Pakete sendet und der Empfänger vollständige Ethernet-Pakete empfängt, während auf dem Übertragungsmedium komprimierte bzw. gekürzte Ethernet-Pakte (Shortened Information Blocks, SIBs) übertragen werden. Dabei kann das Übertragungsmedium Ethernet-basierend sein oder ein Ethernet-basierendes Übertragungsmedium kann emuliert werden. Für den Transport über das Übertragungsmedium können mehrere SIBs in einen Ethernet-Frame verpackt werden.

Es ist die Aufgabe der vorliegenden Erfindung, ein verbessertes Konzept zur Ethernet-Übertragung insbesondere für Profinet-Systeme zu schaffen.

Diese Aufgabe wird durch die Merkmale der unabhängigen Patentansprüche gelöst. Zweckmäßige Ausführungsformen sind Gegenstand der abhängigen Ansprüche.

Erfindungsgemäß können mehrere Echtzeit-Ethernet-Telegramme, beispielsweise mehrere Echtzeit-Profinet-Telegramme z.B. durch das Entfernen eines Paddings auf 64 Byte Telegrammlänge komprimiert werden, wobei mehrere Ethernet-Datenrahmen, insbesondere mehrere Profinet-Datenrahmen, zu einem gemeinsamen Telegramm zusammengefasst werden können. Darüber hinaus können die Medium Access Control-Header (MAC-Header) der Ethernet-Frames, beispielsweise der Profinet-Frames, stark verkürzt werden, da die Wireless-Komponenten entweder die MAC-Adressen der an der Kommunikation beteiligten E/A- und Steuerungsteilnehmer ähnlich wie bei einem Switch lernen können. Darüber hinaus können diese Informationen auch im Falle eines Profinet-Systems beispielsweise durch das Profinet-Engineering mitgeteilt werden. Dabei kann eine beliebige Management-Schnittstelle, wie beispielsweise das SNMP (Simple Network Management Protocol), eingesetzt werden. Somit wird zwischen den an der Funk-Kommunikation beteiligten Infrastrukturkomponenten, wie beispielsweise Access Points oder Clients, nicht mehr ein Standard-konformes Profinet-Telegramm verschickt. Stattdessen wird ein komprimiertes Protokoll verwendet, das aus den Einzelprotokollen mehrerer Profinet-Teilnehmer bestehen kann. Wird also sendeseitig aus zumindest einem der zu einem Telegramm zusammengefassten Ethernet-Datenrahmen ein Medium Access Control Header entfernt, wird dieser empfangsseitig wieder mittels einer Management-Schnittstelle bereitgestellt.

Daher können auf einfache Weise sowohl die Protokoll-Effizienz der Wireless-Kommunikation gesteigert und durch die Übertragung mehrerer Profinet-Telegramme innerhalb eines Telegramms die Timing-Probleme mehrerer E/A-Teilnehmer hinter beispielsweise einer Wireless-Brücke vermieden werden. Das erfindungsgemäße komprimierte und zusammengepackte Protokoll wird bevorzugt ausschließlich für die Funk-Kommunikation verwendet, Das Zusammenfassen bzw. das Auspacken dieser Telegramme wird bevorzugt von der jeweiligen beteiligten Funk-Komponente durchgeführt, so dass die Verbindung außerhalb der Funkzelle wie eine normale Ethernet-Verbindung bzw. wie eine normale Profinet-Verbindung wahrgenommen wird. Das erfindungsgemäße Konzept kann bei allen Funk-Technologien, beispielsweise bei WLAN- oder bei Bluetooth-Übertragung, eingesetzt werden. Damit die Funk-Verbindung für den allgemeinen Netzwerkverkehr transparent bleibt, kann der erfindungsgemäße Mechanismus bevorzugt auf die Echtzeit-Ethernet-Telegramme wie beispielsweise Profinet-Telegramme mit der Ethernet-Typenbezeichnung 0x8892 angewendet werden.

Gemäß einem Aspekt betrifft die Erfindung ein Ethernet-Sendeverfahren mit Zusammenfassen von zumindest zwei Ethernet-Datenrahmen zu einem zusammengesetzten Ethernet-Telegramm, wobei jeder Ethernet-Datenrahmen einen Medium Access Control Header umfasst, wobei ein Medium Access Control Header aus zumindest einem Ethernet-Datenrahmen entfernt wird, und wobei die MAC-Adressen der an der Kommunikation beteiligten Teilnehmer über eine Management-Schnittstelle mitgeteilt werden; und Aussenden des Ethernet-Telegramms über ein Kommunikationsnetzwerk.

Gemäß einer Ausführungsform umfasst das Verfahren das Komprimieren des Ethernet-Telegramms.

Gemäß einer Ausführungsform umfasst das zusammengesetzte Ethernet-Telegramm ein Padding, und wobei das Padding zum Komprimieren des Ethernet-Telegramms herausgenommen wird.

Gemäß einer Ausführungsform wird das Telegramm unter Verwendung des Ethernet- Protokolls über ein Kommunikationsnetzwerk ausgesendet.

Gemäß einer Ausführungsform ist das Telegramm ein Echtzeit-Ethernet-Telegramm.

Gemäß einer Ausführungsform ist das Ethernet-Sendeverfahren ein Profinet-Sendeverfahren, wobei die Ethernet-Datenrahmen Profinet-Datenrahmen sind und wobei das Ethernet-Telegramm ein Profinet-Telegramm, insbesondere ein Echtzeit-Profinet-Telegramm ist.

Gemäß einem Aspekt betrifft die Erfindung ein Ethernet-Empfangsverfahren mit Empfangen eines Ethernet-Telegramms über ein Kommunikationsnetzwerk und Extrahieren von zumindest zwei Ethernet-Datenrahmen aus dem Ethernet-Telegramm, wobei ein Ethernet-Datenrahmen keinen Medium Access Control Header umfasst, und wobei die MAC-Adressen der an der Kommunikation beteiligten Teilnehmer über eine Management-Schnittstelle mitgeteilt werden.

Gemäß einer Ausführungsform wird mittels der Management-Schnittstelle der fehlende Medium Access Control Header empfangsseitig wieder bereitgestellt.

Gemäß einer Ausführungsform ist das Telegramm ein Echtzeit-Ethernet-Telegramm.

Gemäß einer Ausführungsform ist das Ethernet-Empfangsverfahren ein Profinet-Empfangsverfahren, wobei die Ethernet-Datenrahmen Profinet-Datenrahmen sind und wobei das Ethernet-Telegramm ein Profinet-Telegramm, insbesondere ein Echtzeit-Profinet-Telegramm ist.

Gemäß einem Aspekt betrifft die Erfindung eine Ethernet-Sendevorrichtung mit: einer Einrichtung zum Zusammenfassen von zumindest zwei Ethernet-Datenrahmen zu einem Ethernet-Telegramm, einem Komprimierer, welcher ausgebildet ist, einen Medium Access Control Header aus einem der Datenrahmen zu entfernen, um das Ethernet-Telegramm zu komprimieren, einem Sender zum Aussenden des Ethernet-Telegramms über ein Kommunikationsnetzwerk und einer Management-Schnittstelle zum Mitteilen der MAC-Adressen der an der Kommunikation beteiligten Teilnehmer.

Gemäß einer Ausführungsform umfasst die Ethernet-Sendevorrichtung einen Komprimierer zum Komprimieren des Ethernet-Telegramms.

Gemäß einer Ausführungsform ist das Telegramm ein Echtzeit-Ethernet-Telegramm.

Gemäß einer Ausführungsform ist die Ethernet-Sendevorrichtung eine Profinet-Sendevorrichtung, wobei die Ethernet-Datenrahmen Profinet-Datenrahmen sind und wobei das Ethernet-Telegramm ein Profinet-Telegramm, insbesondere ein Echtzeit-Profinet-Telegramm ist.

Gemäß einem Aspekt betrifft die Erfindung eine Ethernet-Empfangsvorrichtung mit einem Empfänger zum Empfangen eines Ethernet-Telegramms über ein Kommunikationsnetzwerk, einem Prozessor zum Extrahieren von zumindest zwei Ethernet-Datenrahmen aus dem Ethernet-Telegramm, wobei ein Ethernet-Datenrahmen keinen Medium Access Control Header aufweist, und einer Management-Schnittstelle zum Mitteilen der MAC-Adressen der an der Kommunikation beteiligten Teilnehmer.

Gemäß einer Ausführungsform wird mittels der Management. Schnittstelle der fehlende Medium Access Control Header empfangsseitig wieder bereitgestellt.

Gemäß einer Ausführungsform ist das Telegramm ein Echtzeit-Ethernet-Telegramm.

Gemäß einer Ausführungsform ist die Ethernet-Empfangsvorrichtung eine Profinet-Empfangsvorrichtung, wobei die Ethernet-Datenrahmen Profinet-Datenrahmen sind und wobei das Ethernet-Telegramm ein Profinet-Telegramm, insbesondere ein EChtzeit-Profinet-Telegramm ist.

Gemäß einem Aspekt betrifft die Erfindung ein Computer-Programm zum Ausführen zumindest eines erfindungsgemäßen Verfahrens.

Weitere Ausführungsbeispiele werden Bezug nehmend auf die beiliegende Zeichnung näher erläutert.

Fig. 1 zeigt ein Blockdiagramm einer Ethernet-Sendevorrichtung mit einer Einrichtung 101 zum zusammenfassen von zumindest zwei Ethernet-Datenrahmen zu einem zusammengesetzten Ethernet-Telegramm und einem Sender 103 zum Aussenden des Ethernet-Telegramms über beispielsweise ein drahtloses Kommunikationsnetzwerk.

Die Sendevorrichtung kann ferner einen Komprimierer zum Komprimieren des Ethernet-Telegramms aufweisen, wobei der Komprimierer beispielsweise die Padding-Bits aus den Datenrahmen bzw. aus den einzelnen Telegrammen herausnimmt. Der Komprimierer kann ferner vorgesehen sein, ein Datenkomprimierungsverfahren zum Komprimieren des Telegramms einzusetzen. Der Komprimierer entfernt jeweils einen oder mehrere Medium Access Control Header aus den Datenrahmen, um das zusammengesetzte Telegramm weiter zu komprimieren.

Eine in der Fig. 1 nicht weiter dargestellte Ethernet-Empfangseinrichtung zum Empfangen eines aus zumindest zwei Ethernet-Datenrahmen zusammengesetzten Ethernet-Telegramms weist zusätzlich zu einem Empfänger zum Empfangen eines Ethernet-Telegramms über ein Kommunikationsnetzwerk einen Prozessor zum Extrahieren von zumindest zwei Ethernet-Datenrahmen aus dem Ethernet-Telegramm auf. Ein oder mehrere Medium Access Control Header, der bzw. die senderseitig aus den Datenrahmen entfernt worden ist bzw. sind, kann bzw. können empfangsseitig wieder mittels einer Management-Schnittstelle bereitgestellt werden.

Die in Fig. 1 dargestellte Sendevorrichtung ist bevorzugt eine Profinet-Sendevorrichtung, so dass die Datenrahmen Profinet-Datenrahmen und das Telegramm ein Profinet-Telegramm sind.

## Patentansprüche

1. **Ethernet-Sendeverfahren,** mit:
Zusammenfassen von zumindest zwei Ethernet-Datenrahmen zu einem Ethernet-Telegramm,
wobei jeder Ethernet-Datenrahmen einen Medium Access Control Header aufweist, und wobei ein Medium Access Control Header aus zumindest einem Ethernet-Datenrahmen entfernt wird,
und wobei die MAC-Adressen der an der Kommunikation beteiligten Teilnehmer über eine Management-Schnittstelle mitgeteilt werden; und
Aussenden des Ethernet-Telegramms über ein Kommunikationsnetzwerk.

2. Ethernet-Sendeverfahren gemäß Anspruch 1, mit:
Komprimieren des Ethernet-Telegramms.

3. Ethernet-Sendeverfahren gemäß Anspruch 2, wobei das zusammengesetzte Ethernet-Telegramm ein Padding enthält, und wobei das Padding zum Komprimieren des Ethernet-Telegramms herausgenommen wird.

4. Ethernet-Sendeverfahren gemäß einem der Ansprüche 1 bis 3, bei dem das Telegramm unter Verwendung des Ethernet-Protocols über ein Kommunikationsnetzwerk ausgesendet wird.

5. Ethernet-Sendeverfahren gemäß einem der Ansprüche 1 bis 4, bei dem das Telegramme ein Echtzeit-Ethernet-Telegramm ist.

6. Ethernet-Sendeverfahren gemäß einem der Ansprüche 1 bis 4, das ein Profinet-Sendeverfahren ist, wobei die Ethernet-Datenrahmen Profinet-Datenrahmen sind und wobei das Ethernet-Telegramm ein Profinet-Telegramm ist.

7. Ethernet-Sendeverfahren gemäß Anspruch 6, bei dem das Telegramm ein Echtzeit-Profinet-Telegramm ist.

8. **Ethernet-Empfangsverfahren,** mit:
Empfangen eines Ethernet-Telegramms über ein Kommunikationsnetzwerk; und
Extrahieren von zumindest zwei Ethernet-Datenrahmen aus dem Ethernet-Telegramm,
wobei ein Ethernet-Datenrahmen keinen Medium Access Control Header aufweist, und wobei die MAC-Adressen der an der Kommunikation beteiligten Teilnehmer über eine Management-Schnittstelle mitgeteilt werden.

9. Ethernet-Empfangsverfahren gemäß Anspruch 8, wobei mittels der Management-Schnittstelle der fehlende Medium Access Control Header empfangsseitig wieder bereitgestellt wird.

10. Ethernet-Empfangsverfahren gemäß Anspruch 8 oder 9, bei dem das Telegramm ein Echtzeit-Ethernet-Telegramm ist.

11. Ethernet-Empfangsverfahren gemäß Anspruch 8 oder 9, wobei das Ethernet-Empfangsverfahren ein Profinet-Empfangsverfahren ist, wobei die Ethernet-Datenrahmen Profinet-Datenrahmen sind und wobei das Ethernet-Telegramm ein Profinet-Telegramm ist.

12. Ethernet-Empfangsverfahren gemäß Anspruch 11, bei dem das Telegramm ein Echtzeit-Profinet-Telegramm ist.

13. **Ethernet-Sendevorrichtung,** mit:
einer Einrichtung (101) zum Zusammenfassen von zumindest zwei Ethernet-Datenrahmen zu einem Ethernet-Telegramm;
einem Komprimierer, welcher ausgebildet ist, einen Medium Access Control Header aus einem der Datenrahmen zu entfernen, um das Ethernet-Telegramm zu komprimieren;
einem Sender (103) zum Aussenden des Ethernet-Telegramms über ein Kommunikationsnetzwerk; und
einer Management-Schnittstelle zum Mitteilen der MAC-Adressen der an der Kommunikation beteiligten Teilnehmer.

14. Ethernet-Sendevorrichtung gemäß Anspruch 13, mit:
einem Komprimierer zum Komprimieren des Ethernet-Telegramms.

15. Ethernet-Sendevorrichtung gemäß Anspruch 13 oder 14, wobei das Telegramm ein Echtzeit-Ethernet-felegramm ist.

16. Ethernet-Sendevorrichtung gemäß Anspruch 13 oder 14, die eine Profinet-Sendevorrichtung ist, wobei die Ethernet-Datenrahmen Profinet-Datenrahmen sind und wobei das Ethernet-Telegramm ein Profinet-Telegramm ist.

17. Ethernet-Sendevorrichtung gemäß Anspruch 16, wobei das Telegramm ein Echtzeit-Profinet-Telegramm ist.

18. **Etherllet-Empfangavorrichtung,** mit:
einem Empfänger zum Empfangen eines Ethernet-Telegramms über ein Kommunikationsnetzwerk;
einem Prozessor zum Extrahieren von zumindest zwei Ethernet-Datenrahmen aus dem Ethernet-Telegramm,
wobei ein Ethernet-Datenrahmen keinen Medium Access Control Header aufweist; und
einer Management-Schnittstelle zum Mitteilen der MAC-Adressen der an der Kommunikation beteiligten Teilnehmer.

19. Ethernet-Empfangsvorrichtung gemäß Anspruch 18, wobei mittels der Management-Schnittstelle der fehlende Medium Access Control Header empfangsseitig wieder bereitgestellt wird.

20. Ethernet-Empfangsvorrichtung gemäß Anspruch 18 oder 19, wobei das Telegramm ein Echtzeit-Ethernet-Telegramm ist.

21. Ethernet-Empfangsvorrichtung gemäß Anspruch 18 oder 19, die eine Profinet-Empfangsvorrichtung ist, wobei die Ethernet-Datenrahmen Profinet-Datenrahmen sind und wobei das Ethernet-Telegramm ein Profinet-Telegramm ist.

22. Ethernet-Empfangsvorrichtung gemäß Anspruch 21, wobei das Telegramm ein Echtzeit-Profinet-Telegramm ist.

23. **Computer-Programm** zum Ausführen eines Verfahrens gemäß einem der Ansprüche 1 bis 8, wenn das Computer-Programm auf einem Computer abläuft.

## Claims

1. Ethernet transmission method, comprising:
combining at least two Ethernet data frames to form an Ethernet telegram,
wherein each Ethernet data frame has a Medium Access Control Header and wherein a Medium Access Control Header is removed from at least one Ethernet data frame,
and wherein the MAC addresses of the participants participating in the communication are communicated via a management interface; and
transmitting the Ethernet telegram via a communications network.

2. Ethernet transmission method as claimed in claim 1, comprising: compressing the Ethernet telegram.

3. Ethernet transmission method as claimed in claim 2, wherein the composite Ethernet telegram contains padding and wherein the padding is taken out for compression of the Ethernet telegram.

4. Ethernet transmission method as claimed in any one of claims 1 to 3, in which the telegram is transmitted via a communications network using the Ethernet protocol.

5. Ethernet transmission method as claimed in any one of claims 1 to 4, in which the telegram is a real-time Ethernet telegram.

6. Ethernet transmission method as claimed in any one of claims 1 to 4, which is a Profinet transmission method, wherein the Ethernet data frames are Profinet data frames and wherein the Ethernet telegram is a Profinet telegram.

7. Ethernet transmission method as claimed in claim 6, in which the telegram is a real-time Profinet telegram.

8. Ethernet reception method, comprising:
receiving an Ethernet telegram via a communications network; and extracting at least two Ethernet data frames from the Ethernet telegram,
wherein an Ethernet data frame does not have a Medium Access Control Header and wherein the MAC addresses of the participants participating in the communication are communicated via a management interface.

9. Ethernet reception method as claimed in claim 8, wherein by means of the management interface the missing Medium Access Control Header is provided again at the receiving side.

10. Ethernet reception method as claimed in claim 8 or 9, in which the telegram is a real-time Ethernet telegram.

11. Ethernet reception method as claimed in claim 8 or 9, wherein the Ethernet reception method is a Profinet reception method, wherein the Ethernet data frames are Profinet data frames, and wherein the Ethernet telegram is a Profinet telegram.

12. Ethernet reception method as claimed in claim 11, in which the telegram is a real-time Profinet telegram.

13. Ethernet transmission device, comprising:
a device (101) for combining at least two Ethernet data frames to form an Ethernet telegram;
a compressor, which is formed, to remove a Medium Access Control Header from an Ethernet data frame for compressing the Ethernet telegram;
a transmitter (103) for transmitting the Ethernet telegram via a communications network;
and a management interface for communicating of the MAC addresses of the participants participating in the communication.

14. Ethernet transmission device as claimed in claim 13, comprising:
a compressor for compressing the Ethernet telegram.

15. Ethernet transmission device as claimed in claim 13 or 14, wherein the telegram is a real-time Ethernet telegram.

16. Ethernet transmission device as claimed in claim 13 or 14, which is a Profinet transmission device, wherein the Ethernet data frames are Profinet data frames and
wherein the Ethernet telegram is a Profinet telegram.

17. Ethernet transmission device as claimed in claim 16, wherein the telegram is a real-time Profinet telegram.

18. Ethernet reception device, comprising:
a receiver for receiving an Ethernet telegram via a communications network;
a processor for extracting at least two Ethernet data frames from the Ethernet telegram,
wherein an Ethernet data frame does not have a Medium Access Control Header;
and a management interface for communicating of the MAC addresses of the participants participating in the communication.

19. Ethernet reception device as claimed in claim 18, wherein by means of the management interface the missing Medium Access Control Header is provided again at the receiving side.

20. Ethernet reception device as claimed in claim 18 or 19, wherein the telegram is a real-time Ethernet telegram.

21. Ethernet reception device as claimed in claim 18 or 19, which is a Profinet reception device, wherein the Ethernet data frames are Profinet data frames and wherein the Ethernet telegram is a Profinet telegram.

22. Ethernet reception device as claimed in claim 21, wherein the telegram is a real-time Profinet telegram.

23. Computer program for the execution of a method as claimed in any one of claims 1 to 8, wrhen the computer program runs on a computer.

## Revendications

1. Procédé d'émission Ethernet, comprenant :
le regroupement d'au moins deux cadres de données Ethernet en un télégramme Ethernet,
dans lequel chaque cadre de données Ethernet présente un en-tête de commande d'accès au support, et dans lequel un en-tête de commande d'accès au support est enlevé de l'au moins un cadre de données Ethernet,
et dans lequel les adresses MAC des abonnés engagés dans la communication sont communiquées par une interface de gestion ; et
l'envoi du télégramme Ethernet par un réseau de communication.

2. Procédé d'émission Ethernet selon la revendication 1, comprenant :
la compression du télégramme Ethernet.

3. Procédé d'émission Ethernet selon la revendication 2, dans lequel le télégramme Ethernet regroupé contient un remplissage, et dans lequel le remplissage est enlevé pour comprimer le télégramme Ethernet.

4. Procédé d'émission Ethernet selon l'une des revendications 1 à 3, dans lequel le télégramme est émis en utilisant le protocole Ethernet par un réseau de communications,

5. Procédé d'émission Ethernet selon l'une des revendications 1 à 4, dans lequel le télégramme est un télégramme Ethernet temps réel.

6. Procédé d'émission Ethernet selon l'une quelconque des revendications 1 à 4, qui est un procédé d'émission Profinet, dans lequel les cadres de données Ethernet sont des cadres de données Profinet et dans lequel le télégramme Ethernet est un télégramme Profinet.

7. Procédé d'émission Ethernet selon la revendication 6, dans lequel le télégramme est un télégramme Profinet temps réel.

8. Procédé de réception Ethernet, comprenant :
la réception d'un télégramme Ethernet par un réseau de communication ; et
l'extraction d'au moins deux cadres de données Ethernet du télégramme Ethernet,
dans lequel un cadre de données Ethernet ne présente pas d'en-tête de commande d'accès au support, et dans lequel les adresses MAC des abonnés engagés dans la communication sont communiquées par une interface de gestion.

9. Procédé de réception Ethernet selon la revendication 8, dans lequel l'en-tête de commande d'accès au support manquant est à nouveau fourni côté réception au moyen de l'interface de gestion.

10. Procédé de réception Ethernet selon la revendication 8 ou 9, dans lequel le télégramme est un télégramme Ethernet temps réel.

11. Procédé de réception Ethernet selon la revendication 8 ou 9, dans lequel le procédé de réception Ethernet est un procédé de réception Profinet, dans lequel les cadres de données Ethernet sont des cadres de données Profinet et dans lequel le télégramme Ethernet est un télégramme Profinet.

12. Procédé de réception Ethernet selon la revendication 11, dans lequel le télégramme est un télégramme Profinet temps réel.

13. Dispositif d'émission Ethernet, comprenant :
un dispositif (101) pour le regroupement d'au moins deux cadres de données Ethernet en un télégramme Ethernet ;
un compresseur, lequel est conçu pour enlever un en-tête de commande d'accès au support d'un des cadres de données, afin de compresser le télégramme Ethernet ;
un émetteur (103) pour l'envoi du télégramme Ethernet par un réseau de communication ; et
une interface de gestion destinée à communiquer les adresses MAC des abonnés engagés dans la communication.

14. Dispositif d'émission Ethernet selon la revendication 13, comprenant :
un compresseur pour la compression du télégramme Ethernet.

15. Dispositif d'émission Ethernet selon la revendication 13 ou 14, dans lequel le télégramme est un télégramme Ethernet temps réel.

16. Dispositif d'émission Ethernet selon la revendication 13 ou 14, qui est un dispositif d'émission Profinet, dans lequel les cadres de données Ethernet sont des cadres de données Profinet et dans lequel le télégramme Ethernet est un télégramme Profinet.

17. Dispositif d'émission Ethernet selon la revendication 16, dans lequel le télégramme est un télégramme Profinet temps réel.

18. Dispositif de réception Ethernet, comprenant :
un récepteur pour la réception d'un télégramme Ethernet par un réseau de communication ;
un processeur pour l'extraction d'au moins deux cadres de données Ethernet du télégramme Ethernet,
dans lequel un cadre de données Ethernet ne présente pas d'en-tête de commande d'accès au support ; et
une interface de gestion permettant de communiquer les adresses MAC des abonnés engagés dans la communication.

19. Dispositif de réception Ethernet selon la revendication 18, dans lequel l'en-tête de commande d'accès au support manquant est à nouveau fourni côté réception au moyen de l'interface de gestion.

20. Dispositif de réception Ethernet selon la revendication 18 ou 19, dans lequel le télégramme est un télégramme Ethernet temps réel.

21. Dispositif de réception Ethernet selon la réception 18 ou 19, qui est un dispositif de réception Profinet, dans lequel les cadres de données Ethernet sont des cadres de données Profinet et dans lequel le télégramme Ethernet est un télégramme Profinet.

22. Dispositif de réception Ethernet selon la revendication 21, dans lequel le télégramme est un télégramme Profinet temps réel.

23. Programme informatique pour la mise en oeuvre d'un procédé selon l'une des revendications 1 à 8 lorsque le programme informatique s'exécute sur un ordinateur.
